# EUROPÄISCHE PATENTSCHRIFT

(11) **EP 0 571 960 B1**
(45) Veröffentlichungstag und Bekanntmachung des Hinweises auf die Patenterteilung: **03.12.1997**
(21) Anmeldenummer: 93108448.7
(22) Anmeldetag: 25.05.1993
(51) Int. Cl.: G01N 21/15

(54) **Verfahren und Vorrichtung zum optischen Erfassen der Abmessung eines Objekts und Anwendung des Verfahrens**
Method and device for optically detecting the dimensions of an object and use of the method
Méthode et dispositif pour la détection optique des dimensions d'un objet et utilisation de la méthode

(30) Priorität: 25.05.1992 CH 1676/92
(43) Veröffentlichungstag der Anmeldung: 01.12.1993
(73) Patentinhaber: ZUMBACH ELECTRONIC AG, CH-2552 Orpund (CH)
(72) Erfinder: Canales, Guillermo, Ing., E-08034 Barcelona (ES)
(74) Vertreter: Jaeger, Klaus, Dr.

(56) Entgegenhaltungen:
- DE-A- 3 908 533
- DE-A- 4 023 610
- DE-B- 1 125 197
- GB-A- 2 221 296
- US-A- 4 647 199
- PATENT ABSTRACTS OF JAPAN vol. 16, no. 368 (P-1398)(5411) 7. August 1992 & JP-A-04 114 388 ( MITSUBISHI ) 15 April 1992

## Beschreibung

Die vorliegende Erfindung betrifft ein Verfahren und eine Vorrichtung zum optischen Erfassen der Abmessung eines Objekts in einem starker Verschmutzung unterworfenen Raum, wobei ein Lichtstrahl durch Fenster des Raumes durchtritt und seine Beeinflussung durch das Objekt erfasst wird. Im allgemeinen wird ein am Ort des Objekts fokusierter Lichtstrahl in Richtung der zu erfassenden Abmessung periodisch abgelenkt, und aus der Dauer der Unterbrechung des Lichtstrahls durch das Objekt wird auf dessen Abmessung geschlossen. Es ist nun klar, dass eine genaue Messung einen möglichst ungehinderten Durchgang des Lichtstrahls durch die Fenster des Raumes, in welchem sich das Objekts befindet, voraussetzt. Das ist jedoch nicht mehr der Fall, wenn die Fenster stark verschmutzt oder gar korrodiert sind. Das ist insbesondere der Fall bei Anlagen zum Extrudieren und anschliessenden Vulkanisieren bestimmter Produkte, beispielsweise von mit einer Isolation aus vernetzbaren Kunststoffen, bzw. Gummi, ummantelten Kabeln oder Drähten. Bei diesem Prozess besteht eine besonders ausgeprägte Gefahr der Verunreinigung der Fenster durch Kondensat und diverse Rückstände, besonders bei der Vulkanisation von Gummi, der gewisse Additive absondert. Bei den relativ hohen Behandlungstemperaturen im Bereiche von 250° C können diese Verunreinigungen richtiggehend eingebrannt werden. Verschmutzungen können besonders auch auftreten beim sogenannten Fluten des Vulkanisationsrohres vor dem Oeffnen der Vulkanisationslinie, d.h. am Ende eines Produktionsvorganges. Den nachteiligen Folgen von Kondensat und Verschmutzung sowie allmähliche Korrosion der Innenseiten der Fenster ist man bisher durch Beheizen derselben und Spülen mit heissen Gasen oder überhitztem Dampf entgegengetreten. Ausserdem hat man darauf geachtet, dass jeweils nur auf ein Niveau geflutet wird, das unterhalb der Fenster liegt, was jedoch einen Verlust an Fertigprodukt bedingt. In jedem Fall ist es nicht vermeidbar, dass die Fenster in verhältnismässig kurzen Abständen ausgewechselt werden müssen.

Ziel vorliegender Erfindung ist es, den Schutz der Fenster entscheidend zu verbessern und damit deren Lebensdauer sowie die Zuverlässigkeit der Messung zu erhöhen. Das Ziel wird dadurch erreicht, dass die Fenster während Messpausen mittels Abschlussorganen vom Raum, in welchem sich das Objekt befindet, getrennt werden. Damit wird erreicht, dass die Fenster nicht unnötig verschmutzt werden, insbesondere während der besonders kritischen Anfahrphase und während des Flutens des Behandlungsraumes einer Vulkanisieranlage.

Vorzugsweise können zusätzlich an sich bekannte Massnahmen wie Beheizung der Fenster und Spülen derselben mit heissem Gas oder überhitztem Dampf angewendet werden. Es ist auch möglich, dem Raum je zwischen einem Fenster und dem geschlossenen Abschlussorgan unter einen Druck zu setzen, welcher mindestens dem im Behandlungsraum herrschenden Druck entspricht, sodass auch bei einer gewissen Undichtheit der Abschlussorgane keine Verunreinigungen aus dem Behandlungsraum an ein Fenster gelangen können.

Die Erfindung wird nun anhand eines Ausführungsbeispiels der erfindungsgemässen Vorrichtung, bzw. der erfindungsgemässen Anwendung, näher erläutert.

In der Zeichnung zeigen:
Figur 1 eine schematische Darstellung eines Extruders mit anschliessendem Vulkanisierraum,
Figur 2 eine Draufsicht, teilweise im Schnitt auf die Messeinheit,
Figur 3 eine Seitenansicht, teilweise im Schnitt der Messeinheit und
Figur 4 eine Stirnansicht, teilweise im Schnitt der Messeinheit.

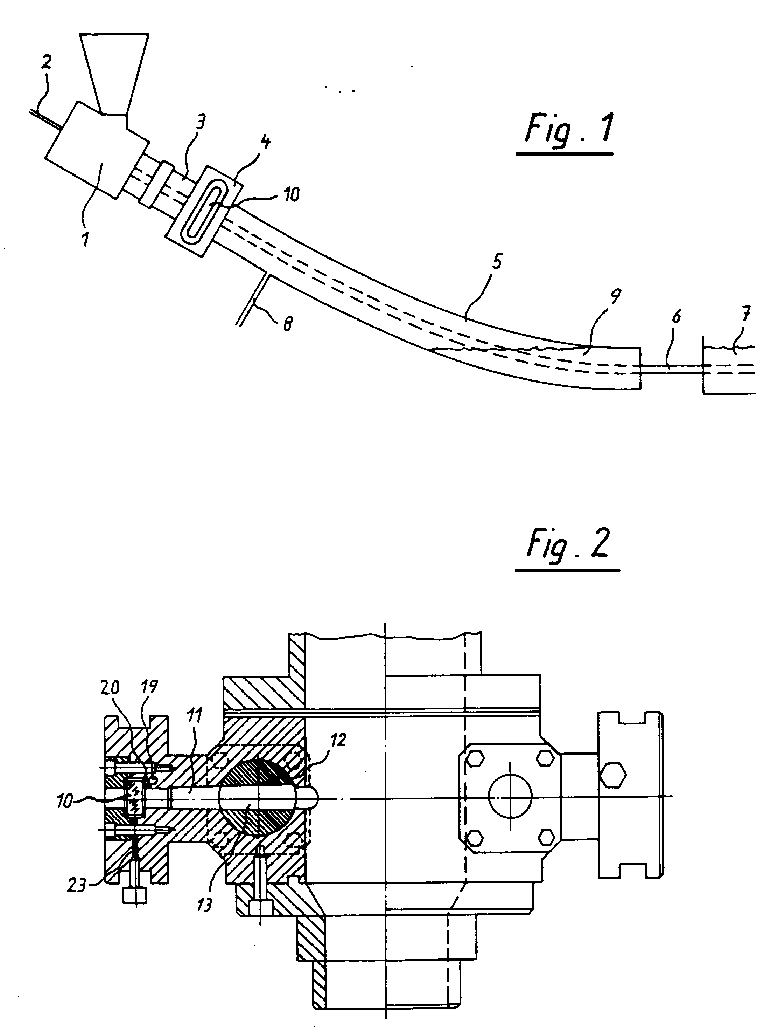

Figur 1 zeigt schematisch einen Extruder 1, welcher der Ummantelung eines Leiters oder Kabels 2 mit einem vernetzbaren Kunststoff, bzw. einem Gummi, dient. Das ummantelte Produkt tritt aus dem Extruder 1 durch ein Teleskoprohr 3 in eine Messeinheit 4, und aus derselben in ein Vulkanisierrohr 5 ein. Das aus dem Vulkanisierrohr austretende Produkt 6 gelangt in ein Wasserbad 7, wo es abgekühlt wird. Dem Vulkanisierrohr 5 wird durch eine Zuleitung 8 Dampf oder Stickstoff bei einer Temperatur um 250° C und einem Druck bis zu 25 bar zugeführt. Wie in Figur 1 angedeutet, kann sich aber im Vulkanisierraum auch ein Bad 9 eines geschmolzenen Salzes befinden.

Figur 1 zeigt schematisch ein längliches Messfenster 10 der Messeinheit 4. Diese Messeinheit weist an gegenüberliegenden Seiten je ein gleichartiges Fenster auf, sodass durch diese beiden Fenster in der oben erwähnten Weise ein Lichtstrahl. durchtreten kann, welcher der Erfassung des Durchmessers des Produktes 6 an der Messstelle erlaubt. Wie immer die Vulkanisation erfolgt, besteht eine erhebliche Gefahr der Verschmutzung der Innenseite der Fenster 10, welche zu den oben erwähnten nachteiligen Folgen führt.

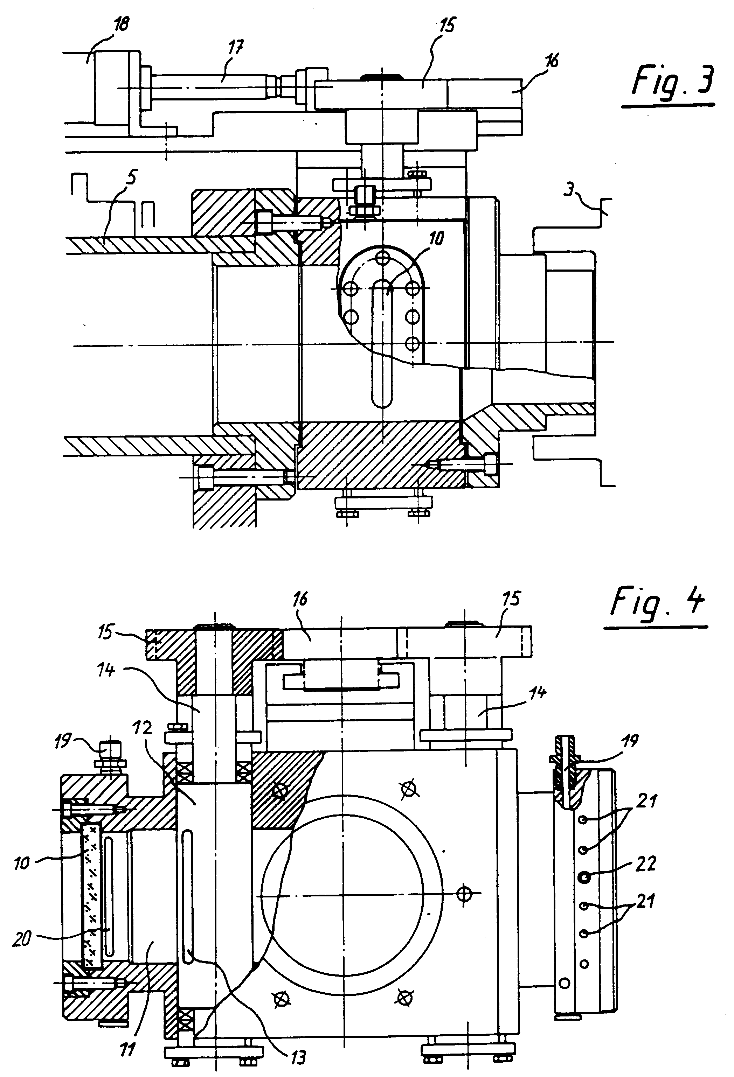

Gemäss der Erfindung wird nun diesen Problemen entgegengewirkt, indem zwischen je einem der Fenster 10 und dem Behandlungsraum im Rohr 5 ein Abschlussorgan angeordnet wird. Die Figuren 2 und 4 zeigen eines der Fenster 10 im Schnitt. Das Fenster liegt in einem Kanal 11, der in den Behandlungsraum des Rohres 5 führt. In diesem Kanal liegt nun ein Drehschieber 12 mit einem diametralen Durchlass 13, dessen Querschnitt demjenigen des Kanals 11 entspricht. Figur 2 zeigt den Drehschieber 12 in offener Stellung, d.h. sein Durchlass liegt fluchtend zum Kanal 11, sodass der Durchtritt eines Lichtstrahls durch das Fenster und den Drehschieber in den Behandlungsraum gewährleistet ist. Auf der in Figur 2 und Figur 4 rechten Seite ist die Anordnung symmetrisch, d.h. auch dort befindet sich innerhalb des Fensters 10 ein Drehschieber 12, und die beiden Drehschieber werden, wie noch erläutert wird, synchron geöffnet und geschlossen. Zu diesem Zwecke ist je eine nach oben verlängerte Welle 14 jedes Drehschiebers mit einem Ritzel 15 versehen, das mit einer gemeinsamen Zahnstange 16 kämmt. Die Zahnstange 16 ist gemäss Figur 3 mit der Kolbenstange 17 eines Betätigungszylinders 18 verbunden, wodurch die erwähnte synchrone Betätigung der beiden Drehschieber zum Oeffnen und Schliessen derselben gewährleistet ist. In Figur 2 sind eine Zuleitung 19 und eine Düse 20 gezeigt, durch welche ein heisses Gas oder überhitzer Dampf an die Innenseite des Fensters 10 geführt werden kann, um dieses Fenster zu spülen und eventuelles Kondensat zu vermeiden, bzw. zu entfernen. In Figur 4 ist angedeutet, dass sich in den die Fenster 10 aufnehmenden Stutzen Bohrungen 21 zur Aufnahme von Heizelementen zur Beheizung des Fensters 10 befinden. In einer weiteren Bohrung 22 befindet sich ein Thermofühler 23, welcher die Heizleistung zur Regelung der Temperatur des Fensters 10 steuert. Die Zuleitung 19 und die Düse 20 können zugleich dazu dienen, den Kanal 11 zwischen dem Fenster 10 und dem zugehörigen geschlossenen Drehschieber 12 unter einen Druck zu setzen, welcher mindestens dem Druck im Vulkanisierraum entspricht, sodass weder Gase noch Flüssigkeit aus dem Vulkanisierraum an das Fenster 10 durchtreten kann.

Während der besonders kritischen Anfahrphase der Anlage werden nun die Drehschieber 12 geschlossen, sodass keine Veruneinigungen an die Innenseiten der Fenster 10 gelangen können. Erst mit einer gewissen Verzögerung werden die Drehschieber 12 wieder geöffnet, damit die Messung des Produktes beginnen kann. Wird die Produktion unterbrochen, wird üblicherweise möglichst der ganze Vulkanisierraum geflutet, um das dort befindliche Produkt zu kühlen. Auch in dieser Phase werden die Drehschieber 12 geschlossen, sodass ohne Nachteil für die Fenster 10 der ganze Vulkanisierraum geflutet werden kann. Wenn auch die Anwendung des erfindungsgemässen Verfahrens, bzw. der erfindungsgemässen Vorrichtung, bei einer Vulkanisieranlage gemäss Figur 1 von besonderem Interesse ist, kann selbstverständlich immer dann entsprechend vorgegangen werden, wenn sich das zu messende Produkt in einem Raum befindet, in welchem mindestens kurzzeitig besonders kritische Verhältnisse herrschen, die zu einer Verschmutzung oder gar Beschädigung der Fenster führen würden. Anstelle von drehbaren Schiebern könnten auch flache, in den Kanal 11 einschwenkbare oder einschiebbare Schieber vorgesehen sein.

Es wäre auch denkbar, einen Drehschieber 12 oder besonders einen flachen Abschlussschieber aus Glas vorzusehen, dessen bei geschlossenem Schieber im Kanal 11 liegenden Flächen durch die jeweilige Schieberbewegung praktisch selbstreinigend sind, sodass auch bei geschlossenem Schieber gemessen werden kann.

Das erfindungsgemässe zusätzliche Abschlussorgan bietet den weiteren Vorteil, dass bei Beschädigung, bzw. Undichtwerden eines Fensters das zugeordnete Abschlussorgan manuell oder automatisch geschlossen werden kann, was erlaubt, einen laufenden Prozess zu Ende zu führen, allerdings ohne Messung oder bei durchsichtigem Abschlussorgan mit beschränkter Messgenauigkeit. Es kann z.B. ein Drucksensor im Behandlungsraum vorhanden sein, der bei einem Druckabfall unter eine bestimmte Grenze die Abschlussorgane schliesst.

Die Messfenster 10 können an anderer Stelle angebracht sein, z.B. im Teleskoprohr 3, möglichst nahe am Extruder 1 oder aber weiter hinten im Behandlungsraum.

## Patentansprüche

1. Verfahren zum optischen Erfassen der Abmessung eines Objekts (6) in einem starker Verschmutzung unterworfenen Raum (5), wobei ein Lichtstrahl durch Fenster (10) des Raumes durchtritt und seine Beeinflussung durch das Objekt erfasst wird, dadurch gekennzeichnet, dass die Fenster (10) während Messpausen mittels Abschlussorganen (12) vom Raum (5) getrennt werden.

2. Verfahren nach Anspruch 1, dadurch gekennzeichnet, dass die Fenster (10) zusätzlich beheizt und/oder mit heissem Gas oder überhitztem Dampf gespült werden.

3. Verfahren nach Anspruch 1 oder 2, dadurch gekennzeichnet, dass zwischen jedem Fenster (10) und dem ihm zugeordneten geschlossenen Abschlussorgan (12) ein Druck aufgebaut wird, der mindestens dem Druck im Raum (5) entspricht.

4. Verfahren nach einem der Ansprüche 1 - 3, dadurch gekennzeichnet, dass bei Beschädigung bzw. Undichtwerden eines Fensters mindestens das dem Fenster zugeordnete Abschlussorgan geschlossen wird.

5. Verfahren nach Anspruch 4, dadurch gekennzeichnet, dass die Abschlussorgane automatisch geschlossen werden, wenn Betriebsbedingungen unzulässig ändern, z.B. der Druck im Raum abfällt.

6. Vorrichtung zur Durchführung des Verfahrens nach Anspruch 1, mit Fenstern (10), durch welche ein Mess-Lichtstrahl durch einen das Messobjekt (6) aufnehmenden Raum (5) durchtreten kann, dadurch gekennzeichnet, dass zwischen jedem Fenster (10) und dem Raum (5) ein betätigbares Abschlussorgan (12) angeordnet ist.

7. Vorrichtung nach Anspruch 6, dadurch gekennzeichnet, dass Drehschieber (12) vorhanden sind.

8. Vorrichtung nach Anspruch 6 oder 7, dadurch gekennzeichnet, dass Zuleitungen (19) und Düsen (20) zur Zufuhr von heissem Gas oder überhitztem Dampf sowie ein Erhitzer für das Gas oder den Dampf vorhanden sind.

9. Vorrichtung nach einem der Ansprüche 6 - 8, dadurch gekennzeichnet, dass Heizelemente (21) zur Beheizung der Fenster vorhanden sind.

10. Vorrichtung nach einem der Ansprüche 6 - 9, dadurch gekennzeichnet, dass Abschlussorgane (12) aus durchsichtigem Material vorhanden sind.

11. Anwendung des Verfahrens nach Anspruch 1 bei der Vulkanisation eines extrudierten Produktes, dadurch gekennzeichnet, dass die Fenster während des Anfahrens der Linie und/oder während des Flutens des Vulkanisierraumes von demselben getrennt werden.

## Claims

1. Method of optically detecting the dimension of an object (6) in a chamber exposed to heavy contamination, wherein a light beam passes through a window (10) of the chamber and the effect thereon by the object is detected, characterised in that the window (10) is separated from the chamber (5) by means of sealing elements (12) during gaps in measuring.

2. Method according to claim 1, characterised in that the windows (10) are additionally heated and/or are flushed with hot gas or superheated steam.

3. Method according to claim 1 or 2, characterised in that between each window (10) and the associated closed sealing element (12) a pressure is built up which is at least equal to the pressure in the chamber (5).

4. Method according to one of claims 1-3, characterised in that if the window becomes damaged or leaks at least the sealing element allocated to the window is closed.

5. Method according to claim 4, characterised in that the sealing elements are automatically closed if operating conditions change in an unacceptable manner, e.g. the pressure in the chamber drops.

6. Apparatus for carrying out the method according to claim 1, having windows (10) through which a measuring light beam can pass through a chamber (5) holding the object (6) to be measured, characterised in that between each window (10) and the chamber (5) is an actuatable sealing element (12).

7. Apparatus according to claim 6, characterised in that rotary disc valves (12) are provided.

8. Apparatus according to claim 6 or 7, characterised in that supply lines (19) and nozzles (20) for supplying hot gas or superheated steam and a heater for the gas or the steam are provided.

9. Apparatus according to one of claims 6-8, characterised in that heating elements (21) for heating the window are provided.

10. Apparatus according to one of claims 6-9, characterised in that sealing elements (12) made of transparent material are provided.

11. Application of the method according to claim 1 in the vulcanisation of an extruded product, characterised in that the windows are separated from the vulcanising chamber during start-up of the line and/or during inundation of the vulcanising chamber.

## Revendications

1. Procédé de relevé optique de la dimension d'un objet (6) dans un espace (5) soumis à un encrassement intense, un faisceau lumineux traversant des fenêtres (10) de l'espace et l'influence qu'il subît du fait de l'objet étant relevée, caractérisé en ce que, pendant des pauses entre mesures, les fenêtres (10) sont isolées de l'espace (5) au moyen d'organes de fermeture (12).

2. Procédé suivant la revendication 1, caractérisé en ce que les fenêtres (10) sont en outre chauffées et/ou balayées au moyen de gaz chaud ou de vapeur surchauffée.

3. Procédé suivant la revendication 1 ou 2, caractérisé en ce qu'entre chaque fenêtre (10) et l'organe de fermeture (12) fermé qui lui est associé, il s'établit une pression qui est au moins égale à la pression dans l'espace (5).

4. Procédé suivant l'une des revendications 1 - 3, caractérisé en ce que, dans le cas où une fenêtre est endommagée ou devient non étanche, au moins l'organe de fermeture associé à la fenêtre est fermé.

5. Procédé suivant la revendication 4, caractérisé en ce que les organes de fermeture sont fermés automatiquement lorsque des conditions de fonctionnement varient d'une manière inadmissible, par exemple lorsque la pression dans l'espace chute.

6. Dispositif de mise en oeuvre du procédé suivant la revendication 1, comportant des fenêtres (10) par lesquelles un faisceau lumineux de mesure peut traverser un espace (5) servant à recevoir l'objet à mesurer (6), caractérisé en ce qu'entre chaque fenêtre (10) et l'espace (5), est disposé un organe de fermeture (12) pouvant être actionné.

7. Dispositif suivant la revendication 6, caractérisé en ce qu'il est prévu des vannes à boisseau (12).

8. Dispositif suivant la revendication 6 ou 7, caractérisé en ce qu'il est prévu des conduits d'amenée (19) et des buses (20) servant à l'acheminement d'un gaz chaud ou de vapeur surchauffée, ainsi qu'un dispositif de chauffage pour le gaz ou la vapeur.

9. Dispositif suivant l'une des revendications 6 - 8, caractérisé en ce qu'il est prévu des éléments chauffants (21) servant à chauffer les fenêtres.

10. Dispositif suivant l'une des revendications 6 - 9, caractérisé en ce qu'il est prévu des organes de fermeture (12) en matière transparente.

11. Utilisation du procédé suivant la revendication 1 dans la vulcanisation d'un produit extrudé, caractérisé en ce que, pendant la mise en marche de la ligne et/ou pendant le noyage de l'espace de vulcanisation, les fenêtres sont isolées de cet espace.
